# EUROPEAN PATENT APPLICATION

(11) **EP 2 051 044 A1**
(43) Date of publication of application: **22.04.2009**
(21) Application number: 08103765.7
(22) Date of filing: 29.04.2008
(51) Int. Cl.: G01D 4/00, G08C 15/00

(54) **Concentrator device with adjustable time-out**

(71) Applicant: KAMSTRUP A/S, 8660 Skanderborg (DK)
(72) Inventor: Pedersen, Rene Rørbye, 8660 Skanderborg (DK); Hald, Flemming, 8370 Hadsten (DK)
(74) Representative: Plougmann & Vingtoft A/S

(57) **Abstract**

A concentrator device arranged for communication with a central unit (CU) and a network of consumption meters (MN), suitable as part of a consumption meter reading system. The concentrator being capable of requesting data from one consumption meters in the network (MN) and to receive a quantity value in response from the network, e.g. sent to the concentrator via one or more other meters in the network. A collision detector (CD) in the concentrator detects if a collision with data from another concentrator device has occurred in the network (MN) after transmission of the request signal. If collision is detected, the concentrator postpones further transmission to the network (MN) until an adjustable time-out period (T), typically 30 second to 10 minutes, set in the concentrator has lapsed, so as to optimize reading speed under the specific conditions in the network (MN). Such concentrator is advantageous for use with a network (MN) of meters communicating without carrier sense or collision detection, since the concentrator handles data collisions without involving other concentrators or the central unit. Thus, individual and independent concentrators can be used. The concentrator itself or the central unit (CU) may initiate adjustment of the time-out period. The time-out (T) can be adjusted in response to collision statistics, in response to a task being performed by the concentrator, in response to a time-out value (T) received from the central unit (CU). An adjustment algorithm can run in software on a processor in the concentrator.

## Description

### Field of the invention

The invention relates to the field of data concentrator devices, more specifically the invention relates to a concentrator device for handling reading of a network of consumption meters. Especially, the concentrator device according to the invention is suitable for reading a network of consumption meters which do not have any means for detection of data collision.

### Background of the invention

Consumption meter reading systems are known where a central unit, e.g. a server placed at the provider, can communicate with a number of independent concentrator devices which then perform wireless reading of consumption meters placed in a limited geographical area. The consumption meters have enough transmission power to be able to wirelessly transmit consumed quantity data to another consumption meter near by. However, not all consumption meters can transmit data directly to the nearest concentrator device. Therefore the consumption meters are wirelessly interconnected in networks with the purpose of re-transmitting data received from another consumption meter. Hereby it is possible to deliver quantity data to the concentrator device even by consumption meters placed far from the nearest concentrator device.

Concentrator devices are placed to ensure that all consumption meters can be read. This means that in some areas, consumption meters are used for retransmission of data from two different concentrator devices - in other words the networks overlap. Most often the consumption meters are only suited for simple communication without any handling of carrier sense or collision detection. This implies that data requested by two concentrators can collide if such data reach one consumption meter at the same time. Hereby data is lost, and this must be handled by the concentrator device. Normally, the concentrator device will wait until lapse of a preset time-out period and then re-transmit its request signal. Hereby the same collision will most probably not be repeated, and the data reading can be completed.

However, such way of handling data collision is not optimal in case a high reading speed is required. Using a preset time-out in case of data collision will not result in an optimal reading speed with a given configuration of concentrator devices and consumption meters in a given area. A high reading speed may be required e.g. if meters in a densely populated area are to be read once a month or even once a week, preferably at the same time.

### Summary of the invention

Thus, according to the above explanation, it is an object of the present invention to provide a concentrator device for high speed reading consumption meters in a network with a simple communication protocol without the consumption meters performing any carrier sense or collision detection handling, and in case another concentrator device operates on an overlapping network of consumption meters.

According to a first aspect, the invention provides a concentrator device arranged for communication with a central unit and a network of consumption meters, the concentrator device including
- a communication unit arranged to transmit a request signal to one of the consumption meters in the network and to receive data representing a quantity value in response from the network of consumption meters, and
- a collision detector arranged to detect if a collision with data from another concentrator device has occurred in the network of consumption meters after transmission of the request signal, wherein, upon detection of a data collision, the concentrator device is arranged to postpone further transmission to the network of consumption meters until a time-out period has lapsed, wherein the time-out period is set by a time-out value in the concentrator device, and wherein the concentrator device is arranged to adjust said time-out value.

Such concentrator device is advantageous since an adjustable time-out value allows the concentrator device to adapt the time-out period for optimum reading speed in response to different conditions of consumption meter networks and different conditions for concentrator devices operating in the same network of consumption meters. This allows the concentrator device to be used for consumption meter networks where the consumption meters have simple communication modules without any carrier sense or collision detection. Further, the concentrator device is suitable for use in reading systems where independent concentrator devices operate on overlapping networks, i.e. concentrator devices communicating with the consumption meters without any interrelation to other concentrator devices. This provides a flexible reading system which can easily be expanded by more concentrator devices without the need for modifying interrelations between existing concentrator devices either in these concentrator devices or in the central unit.

Furthermore, the concentrator device according to the first aspect is suitable as part of a reading system where the central unit can be kept out of any handling of data collision in the network during reading. The central unit only needs to request reading of one or a group of consumption meters to a concentrator device, and the concentrator device then handles the reading and returns the read quantity data to the central unit. This allows the use of simple software in the central unit. Still further, the concentrator device is advantageous since many existing concentrator devices can be modified for operation according to the first aspect by means of a software update only without the need for any hardware change.

In the following different embodiments of the concentrator device will be described.

In one embodiment, the concentrator device is arranged to adjust the time-out value in response to a request received from the central unit. Especially, the concentrator device may be arranged to adjust the time-out value in accordance with data received from the central unit. This allows e.g. an operator of the central unit to enter a time-out value for use by a specific concentrator device, e.g. based on statistical collision observations for the network, which provides a rather simple tool for optimizing reading speed.

Alternatively or additionally, the concentrator device may be arranged to initiate adjustment of the time-out value itself. E.g. the concentrator device may be arranged to adjust the time-out value by entering a value selected from a predetermined list of different time-out values. E.g. the concentrator device may be arranged to determine the time-out value in response to a type of task being performed by the concentrator device, such as quick meter reading, normal meter reading, and network maintenance. This allows the concentrator device e.g. to use a long time-out period if it performs a network maintenance which is not an urgent task, and which will therefore allow a colliding concentrator device to finish a more urgent reading task before the network maintenance task is continued. On the contrary, a low time-out period is selected if the concentrator is requested to read one consumption meter quickly. This will result in a high speed reading because the concentrator device will quickly re-transmit its reading request in case it detects that data is lost. The time-out value may be determined in response to a priority assigned to the type of task being performed by the concentrator device, e.g. in the form of a predetermined set of tasks with respective different time-out values assigned thereto.

In one embodiment, the concentrator device is arranged to store data related to detected data collisions and to calculate a statistical value according thereto, and to adjust the time-out value in response to the statistical value, e.g. in response to the statistical value exceeding a predetermined threshold. Hereby the concentrator device can enhance reading speed by adapting the time-out value to the practical conditions in the network, e.g. iteratively by continuously adjusting the time-out value in response to updated statistical values. The statistical value may include an average number of detected data collisions in relation to a number of transmitted request signals.

The concentrator device may be arranged to accept time-out values within an interval of 1 second to 100 minutes, such as within an interval of 10 seconds to 30 minutes, such as within an interval of 30 seconds to 10 minutes.

Preferably the concentrator device includes a processor arranged to control adjustment of the time-out value, preferably wherein adjustment of the time-out value is performed in software running on the processor. This allows easy update of the time-out adjustment strategy by simply changing a time-out adjustment algorithm in the software running in the concentrator device.

The collision detector may be arranged to determine that a data collision has occurred if a predetermined period of time has lapsed without receiving data in response to transmission of request signal.

The concentrator device may be arranged to repeat the request signal after the time-out period has lapsed, if a data collision is detected.

The communication unit may be arranged for communication with the network of consumption meters in form of at least one of: power line communication and wireless Radio Frequency communication. The communication unit may be arranged for communication with the central unit in form of at least one of: power line communication, wireless Radio Frequency communication, such as GSM, TCP/IP communication, and direct COM communication.

In a second aspect, the invention provides a consumption meter reading system including
- a plurality of concentrator devices according to the first aspect arranged for requesting and receiving data representing quantity values from respective networks of consumption meters, and
- a central unit arranged for communication with the plurality of concentrator devices so as to receive quantity values from the consumption meters.

The plurality of concentrator devices may be arranged to adjust their time-out values independent of other concentrator devices. Such independent concentrator devices allow a flexible and easily expansible reading system.

The central unit may include a user interface arranged for entering a time-out value for use in a specific one of the plurality of concentrators. This provides an easy and simple central control of the time-out adjustment for the associated concentrator devices. In request, the concentrator devices may be arranged to transmit to the central unit data representing the current time-out value, which will further allow an operator to monitor the operation of the concentrator devices.

At least one of the consumption meters is preferably arranged to transmit data representing a quantity value to one of the plurality of concentrator devices via at least one other of the consumption meters in the network.

The plurality of networks may partly or entirely overlap, i.e. the networks of consumption meters include one or more consumption meters being part of at least two of the plurality of networks.

At least a part of the consumption meters may be arranged for receiving and transmitting data without any carrier sensing and without any collision detection. Hereby simple and low cost communication modules can be used in the consumption meters.

The consumption meters preferably include at least one of: an electricity meter, a heat meter, a gas meter, and a water meter. The network of consumption meters may further include devices not being consumption meters but still such devices can be arranged to receive and re-transmit quantity data such as the consumption meters in the network.

In a third aspect, the invention provides a method for controlling a concentrator device arranged for communication with a central unit and a network of consumption meters, the method including
- transmitting a request signal to one of the consumption meters in the network and to receive data representing a quantity value in response from the network of consumption meters,
- detecting if a collision with data from another concentrator unit has occurred in the network of consumption meters after transmitting the request signal,
- postponing further transmission to the network of consumption meters until a time-out period has lapsed, if a data collision is detected, the time-out period being determined in accordance with a time-out value, and
- adjusting the time-out value to a different value.

In a fourth aspect, the invention provides a computer executable program code arranged to perform the method according to the third aspect, preferably a program code arranged for execution on a processor in the concentrator device.

It is appreciated that any advantage mentioned for the first aspect applies as well for the second, third and fourth aspects. Further, any sub aspect mentioned in connection with the first aspect may in any way be combined with any one of the second, third and fourth aspects.

### Brief description of drawings

In the following, the invention will be described in more details by referring to embodiments illustrated in the accompanying drawings, of which
Fig. 1 illustrates a schematic diagram of a concentrator device embodiment, and
Fig. 2 illustrates a second concentrator device embodiment,
Fig. 3 illustrates a third concentrator device embodiment, and
Fig. 4 illustrates a reading system embodiment.

### Detailed description of the invention

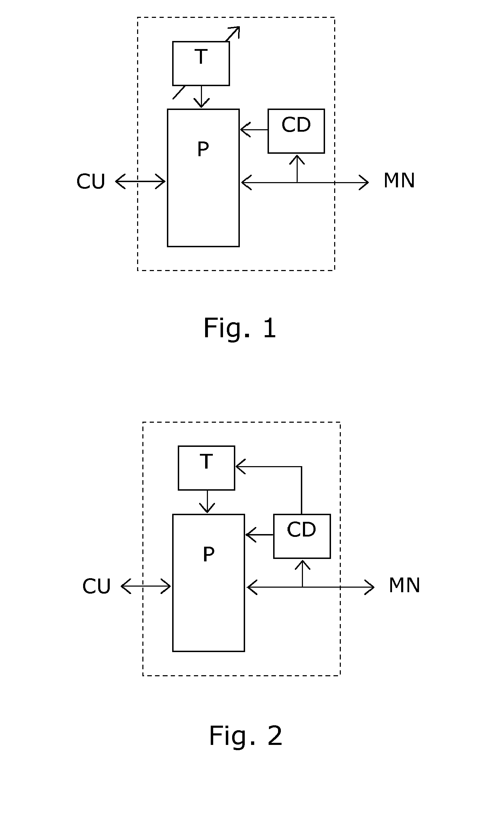

Fig. 1 illustrates selected parts of a concentrator device according to the invention. The concentrator device is arranged for communication with a central unit CU, e.g. in the form of a server system which may be positioned at the consumption entity provider. The concentrator device is also arranged for communicating with a consumption meter network MN. Especially, the concentrator device may be arranged to transmit a request signal to one specific consumption meter to request its current consumption quantity value, and the consumption meter then responds by sending its quantity data. However, since the consumption meters only has a very limited transmission power, e.g. for wireless RF transmission, the far away consumption meters can not transmit its quantity data directly to the concentrator device requesting the data. However, it then transmits the quantity data to a meter in the network which is close enough to receive the quantity data. With a network NM of a number of single consumption meters arranged for intercommunication of data, e.g. by means of RF communication, it is possible for one concentrator device to be able to read consumption meters in a wide area. One consumption meters can send quantity data from a far consumption meter via several other consumption meters in the network. Finally, the quantity data from the far consumption meter arrives at a consumption meter positioned close enough to the concentrator device to be able to transmit the quantity data to the concentrator device.

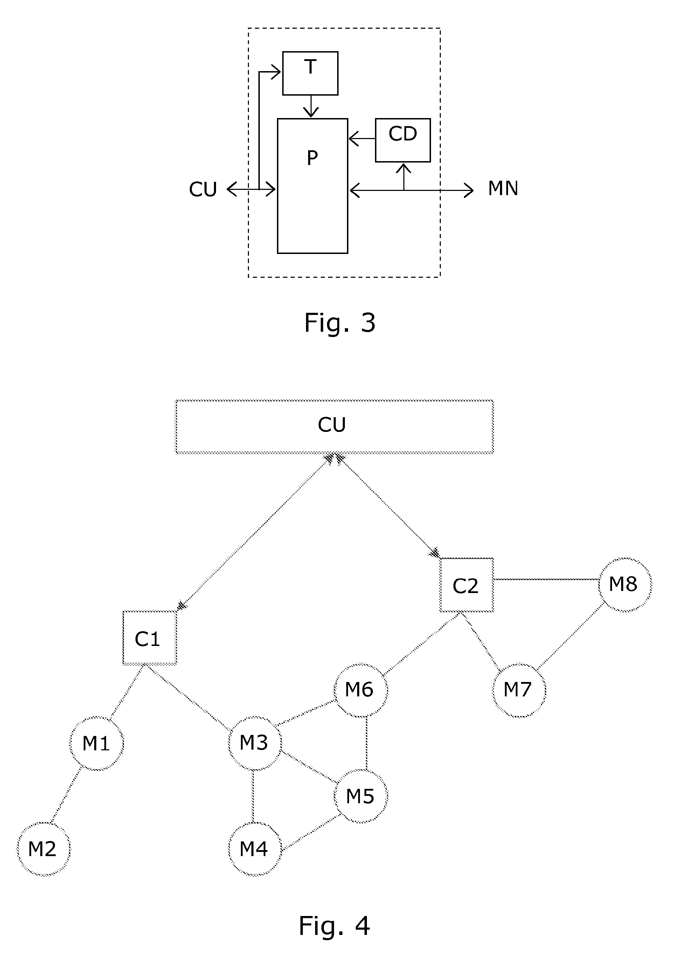

The concentrator device has a processor P handling the communication with the central unit CU and the network of consumption meters NM. A collision detector CD is arranged to detect if a data collision has resulted in data being lost in response to a request signal. This may happen because in some areas there may be consumption meters being part of two or more networks that cooperate to communicate quantity data to two or more independent concentrator devices, i.e. concentrator devices which do not coordinate transmission of request signals. This is further described in connection with Fig. 4.

The collision detector CD may simply be arranged to measure the time after a request signal is transmitted from the concentrator device. If this time exceeds a predetermined value before quantity data is received in response, then the collision detector CD concludes that the quantity data is lost due to collision with data requested by another concentrator device. If such collision is detected, the processor P then postpones further transmission of request signals (e.g. repeating the request signal to which respond data was never received) until a time-out T has lapsed.

The time-out value T can be stored in memory, and this memory is then read when a postponement procedure is initiated by the processor. The time-out value T can be adjusted - either initiated by the concentrator device itself or by request from the central unit CU. Due to the adjustment capability of the time-out value T, the reading speed of the consumption meters can be increased, because it is possible to adjust the time-out value T to optimize the time-out T for a system of a central unit reading consumption meters by means of a number of independent concentrator devices reading consumption meters via overlapping networks of meters. If the time-out T is fixed to a too high value, then time is lost waiting to repeat a request signal, while on the other hand a too low value will most likely result in yet another collision with data requested by another concentrator device, or it will cause data lost for this other concentrator device.

Fig. 2 illustrates the principle behind one way of adjusting the time-out value T initiated by the concentrator device itself, namely in response to statistical data related to collision detection observed by the collision detector CD. It is to be understood that the illustration in Fig. 2 is only schematic with the purpose of illustrating the principle, and in practical implementation of such time-out T adjustment scheme, the processor P will be involved in the time-out T adjustment. In a specific embodiment, the concentrator device is arranged to store data related to detected data collisions and to calculate a statistical value according thereto. The concentrator device then adjusts the time-out value T in response to the statistical value, e.g. if this value exceeds a predetermined threshold. E.g. one possible statistical value may be an average number of data collisions observed per 100 transmitted request signals. If this number exceeds a predetermined threshold value, then the time-out value T is adjusted to a higher value, e.g. by increasing the time-out value T by a predetermined step size. Especially, the time-out value T may be iteratively adjusted in response to a statistical value reflecting observed data collisions.

Fig. 3 illustrates a principle behind another way of adjusting the time-out value T, namely initiated by a request from the central unit. This can be performed in different ways, e.g. by replacing a stored time-out value T by a different value received from the central unit. E.g. the central unit may include a user input that allows an operator of the central unit to enter a time-out value and send it to a specific concentrator device. The concentrator device then receives the time-out value and adjusts its current time-out value T to the one requested from the central unit. This allows human interaction with the purpose of optimizing performance of a reading system, e.g. based on an overall knowledge of the occurrence of data collisions. Alternatively, the central unit may only transmit a request signal to the concentrator device requesting an adjustment of the time-out value T, while the new time-out value may be determined by the concentrator device itself.

It is to be understood that even though illustrated in separate sketches, the principles of adjusting the time-out value T shown in Figs. 2 and 3 may be combined in order to provide a more efficient way of optimizing performance of a system of independent concentrator devices.

Further, an additional scheme for adjusting the time-out value T may be to adjust the time-out value T according to the task being performed or mode of operation of the concentrator device. Especially, such tasks or modes may have assigned different priorities, and for high priority tasks, e.g. an immediate request for reading of one specific consumption meter, the time-out T can be adjusted to a very low value meaning that a high speed reading is being performed. A medium time-out value T can be used for normal reading of a large number of meters. A high value T can be used when performing maintenance or check tasks on the network of meters which indicates that such tasks have a rather low priority and therefore the concentrator accepts to wait for a rather long time in case of a data collision, thereby allowing another concentrator device to finish a more important task without any unnecessary interference.

Fig. 4 illustrates an example of a consumption meter reading system including a central unit CU, two independent concentrator devices C1, C2 arranged for reading the consumption meters M1-M8 which are seen to be interconnected in networks overlapping between the concentrator devices C1, C2. The lines connecting two consumption meters M1-M8 illustrates that these meters are capable of communicating with each other, e.g. by means of wireless RF communication. The intercommunication capability of the consumption meters M1-M8 is determined by their geographical position and by the presence of RF obstructing elements, and with transmitting power being a limiting factor.

If the consumption meters M1-M8 all have simple communication modules without any capability of handling collision detection, then simultaneous request of data from the two concentrator devices C1, C2 may result in data collision. E.g. concentrator device C1 may request data from M4, while almost simultaneously concentrator device C2 requests data from M5. This may result in simultaneous transmission of data from M4 and M5 which will then collide at consumption meter M3, because it simultaneously receives data signals from M4 and M5. As a result, data from M4 is lost, because M3 is unable to re-transmit data from M4 to C1.

Most likely, data from M5 will reach C2, because M6 can receive data from M5, while it is unable to receive the simultaneous data from M4.

It is to be understood that the principles described above do not apply solely for reading of consumption quantity data from the consumption meters. The principles apply as well for reading of additional data apart from the consumption meters, e.g. quality parameter relating to the voltage observed by electricity meters.

Further, it is to be understood that apart from consumption meters, the principles of adjusting the time-out value may be applied as well in case the concentrator device is used also for collection of data and possibly control of such as: street light controlling units, tariffing of consumption meters, disconnection of loads on power networks, alarming e.g. in case intrusion of a consumption meter is detected (tamper detection), alarming in case smoke/fire is detected in a consumption meter, and configuration of various parameters of the consumption meters (logging periods and registers for logging).

The invention as described above may be implemented purely in software running on the concentrator device. This enables an easy way of modifying the time-out adjustment scheme by simply replacing the software by software with a modified time-out adjustment algorithm. However, the time-out adjustment may also include hardware elements in the concentrator device, or by a combination of software and hardware elements.

To sum up, the invention provides a concentrator device arranged for communication with a central unit CU and a network of consumption meters MN, suitable as part of a consumption meter reading system. The concentrator being capable of requesting data from one consumption meters in the network MN and to receive a quantity value in response from the network, e.g. sent to the concentrator via one or more other meters in the network. A collision detector CD in the concentrator detects if a collision with data from another concentrator device has occurred in the network MN after transmission of the request signal. If collision is detected, the concentrator postpones further transmission to the network MN until an adjustable time-out period T, typically 30 second to 10 minutes, set in the concentrator has lapsed, so as to optimize reading speed under the specific conditions in the network MN. Such concentrator is advantageous for use with a network MN of meters communicating without carrier sense or collision detection, since the concentrator handles data collisions without involving other concentrators or the central unit. Thus, individual and independent concentrators can be used. The concentrator itself or the central unit CU may initiate adjustment of the time-out period. The time-out T can be adjusted in response to collision statistics, in response to a task being performed by the concentrator, in response to a time-out value T received from the central unit CU. An adjustment algorithm can run in software on a processor in the concentrator.

Although the present invention has been described in connection with the specified embodiments, it is not intended to be limited to the specific form set forth herein. Rather, the scope of the present invention is limited only by the accompanying claims. In the claims, the term "comprising" or "including" does not exclude the presence of other elements. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Furthermore, reference signs in the claims shall not be construed as limiting the scope.

## Claims

1. A concentrator device arranged for communication with a central unit (CU) and a network of consumption meters (MN), the concentrator device including
- a communication unit arranged to transmit a request signal to one of the consumption meters in the network (MN) and to receive data representing a quantity value in response from the network of consumption meters (MN), and
- a collision detector (CD) arranged to detect if a collision with data from another concentrator device has occurred in the network of consumption meters (MN) after transmission of the request signal,
wherein, upon detection of a data collision, the concentrator device is arranged to postpone further transmission to the network of consumption meters (MN) until a time-out period (T) has lapsed,
wherein the time-out period is set by a time-out value (T) in the concentrator device, and
wherein the concentrator device is arranged to adjust said time-out value (T).

2. Concentrator device according to claim 1, arranged to adjust the time-out value (T) in response to a request received from the central unit (CU).

3. Concentrator device according to claim 1 or 2, arranged to adjust the time-out value (T) in accordance with data received from the central unit (CU).

4. Concentrator device according to any of the preceding claims, arranged to initiate adjustment of the time-out value (T).

5. Concentrator device according to claim 4, arranged to adjust the time-out value (T) by entering a value selected from a predetermined list of different time-out values.

6. Concentrator device according to claim 4 or 5, arranged to determine the time-out value (T) in response to a type of task being performed by the concentrator device, such as quick meter reading, normal meter reading, and network maintenance.

7. Concentrator device according to claim 6, wherein the time-out value (T) is determined in response to a priority assigned to the type of task being performed by the concentrator device.

8. Concentrator device according to claim 6 or 7, including a predetermined set of tasks with respective different time-out values assigned thereto.

9. Concentrator device according to any of claims 4-8, arranged to store data related to detected data collisions and to calculate a statistical value according thereto, the concentrator device further being arranged to adjust the time-out value (T) in response to the statistical value exceeding a predetermined threshold.

10. Concentrator device according to claim 9, wherein the statistical value includes an average number of detected data collisions in relation to a number of transmitted request signals.

11. Concentrator device according to any of the preceding claims, arranged to accept time-out values (T) within an interval of 1 second to 100 minutes, such as within an interval of 10 seconds to 30 minutes, such as within an interval of 30 seconds to 10 minutes.

12. Concentrator device according to any of the preceding claims, including a processor (P) arranged to control adjustment of the time-out value (T).

13. Concentrator device according to claim 12, wherein adjustment of the time-out value (T) is performed in software running on the processor (P).

14. Concentrator device according to any of the preceding claims, wherein the collision detector (CD) is arranged to determine that a data collision has occurred if a predetermined period of time has lapsed without receiving data in response to transmission of request signal.

15. Concentrator device according to any of the preceding claims, arranged to repeat the request signal after the time-out period has lapsed, if a data collision is detected.

16. Concentrator device according to any of the preceding claims, wherein the communication unit is arranged to transmit data received from the consumption meters (MN) to the central server (CU).

17. Concentrator device according to any of the preceding claims, wherein the communication unit is arranged for communication with the network of consumption meters (MN) in form of at least one of: power line communication and wireless Radio Frequency communication.

18. Concentrator device according to any of the preceding claims, wherein the communication unit is arranged for communication with the central unit (CU) in form of at least one of: power line communication, wireless Radio Frequency communication, such as GSM, TCP/IP communication, and direct COM communication.

19. A consumption meter reading system including
- a plurality of concentrator devices (C1, C2) according to any of claims 1-18 arranged for requesting and receiving data representing quantity values from respective networks of consumption meters M1-M8), and
- a central unit (CU) arranged for communication with the plurality of concentrator devices (C1, C2) so as to receive quantity values from the consumption meters (M1-M8).

20. Consumption meter reading system according to claim 19, wherein the plurality of concentrator devices (C1, C2) are arranged to adjust their time-out values independent of other concentrator devices (C1, C2).

21. Consumption meter reading system according to claim 19 or 20, wherein the central unit (CU) includes a user interface arranged for entering a time-out value for use in a specific one of the plurality of concentrator devices (C1, C2).

22. Consumption meter reading system according to any of claims 19-21, wherein one of the consumption meters (M1-M8) is arranged to transmit data representing a quantity value to one of the plurality of concentrator devices (C1, C2) via at least one other of the consumption meters in the network (M1-M8).

23. Consumption meter reading system according to any of claims 19-22, wherein the plurality of networks of consumption meters include one or more consumption meters (M3-M6) being part of at least two of the plurality of networks.

24. Consumption meter reading system according to any of claims 19-23, wherein at least a part of the consumption meters (M1-M8) are arranged for receiving and transmitting data without any carrier sensing and without any collision detection.

25. Consumption meter reading system according to any of claims 19-24, wherein the consumption meters (M1-M8) include at least one of: an electricity meter, a heat meter, a gas meter, and a water meter.

26. Method for controlling a concentrator device arranged for communication with a central unit and a network of consumption meters, the method including
- transmitting a request signal to one of the consumption meters in the network and to receive data representing a quantity value in response from the network of consumption meters,
- detecting if a collision with data from another concentrator unit has occurred in the network of consumption meters after transmitting the request signal,
- postponing further transmission to the network of consumption meters until a time-out period has lapsed, if a data collision is detected, the time-out period being determined in accordance with a time-out value, and
- adjusting the time-out value to a different value.

27. Computer executable program code arranged to perform the method according to claim 26, such as program code arranged for execution on a processor in the concentrator device.
